# EUROPÄISCHE PATENTANMELDUNG

(11) **EP 4 752 297 A1**
(43) Veröffentlichungstag der Anmeldung: **03.06.2026**
(21) Anmeldenummer: 24216552.0
(22) Anmeldetag: 29.11.2024
(51) Int. Cl.: E03D 11/14, F16B 7/04, F16B 35/00, A47K 13/26

(54) **WC, WC-BEFESTIGUNGSSYSTEM UND WC-SITZBEFESTIGUNG**

(71) Anmelder: Kantor, Georg, 6330 Kufstein (AT)
(72) Erfinder: Kantor, Georg, 6330 Kufstein (AT)
(74) Vertreter: Schwarz & Partner Patentanwälte GmbH

(57) **Zusammenfassung**

WC-Befestigungssystem (100) zur Befestigung einer Wandtoilette (10) an einer Wand (2) über ein an der Wand (2) anbringbares Halteelement (3), wobei der Toilettenkörper (11) eine Öffnung (12) aufweist, welche wandseitig am Toilettenkörper (11) angeordnet ist und in welche das Halteelement (3) einsetzbar ist, wobei das WC-Befestigungssystem (100) umfasst: einen Bolzen (101), welcher mit dem an der Wand (2) befestigten Halteelement (3) verbindbar ist; einen Befestigungskörper (107), welcher an der Innenseite des Toilettenkörpers (11) befestigbar ist; und einen Befestigungsbolzen (105) zur Herstellung einer Verbindung zwischen dem Bolzen (101) und dem Befestigungskörper (107), dadurch gekennzeichnet, dass der Befestigungsbolzen (105) ein erstes Ende (115) aufweist, welches über ein Toilettensitzbefestigungsloch (14) in den Toilettenkörper (11) einführbar ist, wobei über das erste Ende (115) der Befestigungskörper (107) mit dem Bolzen (101) verbindbar ist, wobei der Befestigungsbolzen (105) ein zweites Ende (116) aufweist, welches einen Verbindungsabschnitt (118) für eine Toilettensitzbefestigung (15) aufweist und welches eine Werkzeugaufnahme (117) für ein Werkzeug zur Verbindung von Bolzen (101) und Befestigungskörper (107) aufweist.

## Beschreibung

Die vorliegende Erfindung betrifft ein WC-Befestigungssystem zur Befestigung einer Wandtoilette an einer Wand über ein an der Wand anbringbares Halteelement, wobei der Toilettenkörper eine Öffnung aufweist, welche wandseitig am Toilettenkörper angeordnet ist und in welche das Halteelement einsetzbar ist, wobei das WC-Befestigungssystem umfasst: (a) einen Bolzen, welcher mit dem an der Wand befestigten Halteelement verbindbar ist, (b) einen Befestigungskörper, welcher an der Innenseite des Toilettenkörpers befestigbar ist und im Zustand eines eingesetzten Halteelement dieses in einem Teilbereich umgibt, und (c) einen Befestigungsbolzen zur Herstellung einer Verbindung zwischen dem Bolzen und dem Befestigungskörper. Weiters betrifft die Erfindung eine Wandtoilette umfassend einen Toilettenkörper und ein WC-Befestigungssystem. Schließlich betrifft die Erfindung ein Verfahren zur Befestigung eines Toilettenkörpers einer Wandtoilette an einer Wand über ein an der Wand angebrachtes Halteelement, sowie eines Toilettensitzes am Toilettenkörper.

### HINTERGRUND DER ERFINDUNG

Aufgrund der Bequemlichkeit und einfachen Reinigung erfreuen sich Wandtoiletten beziehungsweise Wand-WCs oder Hänge-WCs einer großen Beliebtheit. Durch die Montage an der Wand kommt die Wandtoilette nicht mit dem Boden in Berührung, was neben der einfacheren Reinigung zudem Platz spart, flexibler in der Höheneinstellung ist und für eine gesteigerte Ästhetik sorgt.

Derartige Wandtoiletten werden in der Regel über Wandbefestigungen angebracht. Die Wandbefestigungen umfassen dabei Trag- oder Wandbolzen, welche in beispielsweise Verdübelungen in der Wand einbringbar sind. Über entsprechende Aufnahmen kann der wandseitige Toilettenkörper auf die Wandbolzen aufgeschoben und in weiterer Folge damit verbunden werden. Im Stand der Technik sind die Halteelemente, welche zum Verbinden des Toilettenkörpers mit der Wand verwendet werden, nach der Montage des Toilettenkörpers entweder von unten (wie z.B. in EP 3 770 351 A1 beschrieben), oben oder seitlich zugänglich. Der Zugang von oben ist dabei zumeist derart gewählt, dass die Halteelemente von außen unsichtbar bzw. verdeckt sind. Ein solcher verdeckter Zugang wird aufgrund seiner Ästhetik bevorzugt.

Ein Toilettenkörper mit einer solchen verdeckten Wandhalterung ist unter anderem in dem Dokument EP 2 199 473 A1 offenbart. Die in EP 2 199 473 A1 beschriebene Wandhalterung zeichnet sich durch eine Arretierungseinrichtung aus, welche ein Halteelement derart zum Toilettenkörper positioniert, dass eine vom Halteelement getragene Abziehsicherung, vorzugsweise eine Innensechskantschraube, über ein WC-Sitzbefestigungsloch des Toilettenkörpers zugänglich ist. Die Arretierungseinrichtung kann dabei als eine mit dem Toilettenkörper ausgebildete Positionierungsnase ausgebildet sein. Im montierten Zustand greift die Positionierungsnase in eine Nut des Halteelementes ein.

Eine weitere Wandtoilette mit einer verdeckten Wandbefestigung ist in dem Dokument CN 206495294 U gezeigt. Eine Befestigungshalterung für einen Wassertank ist mit der Wand verbunden. An dieser Befestigungshalterung ist ein Wandbolzen mit einer trapezförmigen Nut anbringbar, wobei die Nut in Richtung WC-Sitzbefestigungsloch des Toilettenkörpers zeigt. Der Wandbolzen ist in einen Befestigungskörper einführbar und damit verbindbar. Der Befestigungskörper ist in einem vorherigen Schritt mit dem Toilettenkörper verbindbar. Zudem weist der Befestigungskörper ein Innengewinde mit teilweise eingeschraubter Sicherungsschraube auf. Diese Sicherungsschraube weist ein erstes Ende mit einem Innensechskant auf, welches in Richtung WC-Sitzbefestigungsloch orientiert ist. Über das WC-Sitzbefestigungsloch des Toilettenkörpers ist die Sicherungsschraube mittels eines Außensechskantschlüssels einschraubbar, wobei durch das Einschrauben in den Befestigungskörper ein zweites Ende der Sicherungsschraube in die Nut des Wandbolzens einführbar ist. Dies ermöglicht die Befestigung des Toilettenkörpers an der Wand.

Sobald die Wandtoiletten mit verdeckter Wandbefestigung montiert sind, ist der WC-Sitz über diverse Systeme am Toilettenkörper installierbar. Die Montage des WC-Sitzes erfolgt dann über eine Toilettensitzbefestigung, wobei hier zumeist Kippdübel, Spreizdübel oder Excenterscheiben eingesetzt werden. Diverse Kipp-, Klapp- und Spreizdübel für Toiletten sind aus dem Stand der Technik bekannt.

Jedoch ist eine derartige Vorgehensweise bzw. Art der Befestigung, welche von oben praktiziert wird, sehr kostspielig und aufwendig. Wenn sich die Wandtoilette nach einiger Zeit, bzw. auch bei Verwendung einer Schallschutzmatte etwas lockert, muss der WC-Sitz zur Nachjustierung abgenommen werden. Meist sind die Teile der Toilettensitzbefestigung danach nicht mehr verwendbar und führen zu einer aufwendigen Ersatzteilbeschaffung. Außerdem beansprucht in den meisten Fällen die Montage des WC-Sitzes viel Zeit.

### KURZBESCHREIBUNG DER ERFINDUNG

Aufgrund der Nachteile des Stands der Technik, liegt der Erfindung die Aufgabe zugrunde, eine Wandbefestigung für eine Wandtoilette bereitzustellen, welche unsichtbar ist. Zusätzlich soll die Befestigung eines WC-Sitzes an der Wandtoilette ermöglicht werden.

Gelöst wird diese Aufgabe durch ein WC-Befestigungssystem zur Befestigung einer Wandtoilette an einer Wand über ein an der Wand anbringbares Halteelement,
wobei der Toilettenkörper eine Öffnung aufweist, welche wandseitig am Toilettenkörper angeordnet ist und in welche das Halteelement einsetzbar ist,
wobei das WC-Befestigungssystem umfasst:
   - einen Bolzen, welcher mit dem an der Wand befestigten Halteelement verbindbar ist,
   - einen Befestigungskörper, welcher an der Innenseite des Toilettenkörpers befestigbar ist, und
   - einen Befestigungsbolzen zur Herstellung einer Verbindung zwischen dem Bolzen und dem Befestigungskörper,
dadurch gekennzeichnet, dass
der Befestigungsbolzen ein erstes Ende aufweist, welches über ein Toilettensitzbefestigungsloch im Toilettenkörper einführbar ist, wobei über das erste Ende der Befestigungskörper mit dem Bolzen verbindbar ist,
wobei der Befestigungsbolzen ein zweites Ende aufweist, welches einen Verbindungsabschnitt für eine Toilettensitzbefestigung aufweist und welches eine Werkzeugaufnahme für ein Werkzeug zur Verbindung von Bolzen und Befestigungskörper aufweist.

Die Aufgabe wird außerdem gelöst durch ein Verfahren zur kombinierten Befestigung eines Toilettenkörpers einer Wandtoilette an einer Wand über ein an der Wand angebrachtes Halteelement, sowie eines Toilettensitzes am Toilettenkörper mittels eines WC-Befestigungssystems der zuvor genannten Art,
umfassend die Schritte:
a) Befestigen des Bolzens am Halteelement,
b) Einsetzen des Bolzens in die Öffnung des Toilettenkörpers,
c) Einführen des ersten Endes des Befestigungsbolzens in das Toilettensitzbefestigungsloch und Verbinden des Befestigungskörpers mit dem Bolzen über die Betätigung eines Werkzeugs in der Werkzeugaufnahme,
d) Ausrichten der Toilettensitzbefestigung des Toilettensitzes,
e) Befestigen der Toilettensitzbefestigung auf dem Verbindungsabschnitt des Befestigungsbolzens, und
f) gegebenenfalls Befestigen des Toilettensitzes an der Toilettensitzbefestigung.

Der Befestigungsbolzen mit zwei unterschiedlichen Enden, ermöglicht einerseits eine unsichtbare Verbindung zwischen Wand und Wandtoilette, da der Befestigungsbolzen in das bereits in der Wandtoilette vorhandene Toilettensitzbefestigungsloch eingeführt wird und nach Anbringen des Toilettensitzes nicht mehr erkennbar ist. Andererseits ermöglicht der Befestigungsbolzen auch die direkte Befestigung des Toilettensitzes bzw. der Toilettensitzbefestigung am Befestigungsbolzen und somit am Toilettenkörper. Diese Art der Befestigung hat außerdem den Vorteil, dass die Verbindungen zwischen Toilettenkörper, Toilettensitzbefestigung und Wand lösbar und wieder neu herstellbar sind und auch bei Lockern der Verbindungen wieder fester adjustierbar sind. Beim Stand der Technik sind die Befestigungsbolzen nach der Erstmontage kaum oder schwer lösbar oder schwer readjustierbar. Durch eine solche kombinierte Wandtoiletten und WC-Sitzbefestigung ergibt sich eine zeitsparende, kostengünstige und einfache Montage.

Durch einen hohen Grad an Vorfertigung im Werk mit Vormontage der Einbauteile, sowie die bereits vorhandene Möglichkeit der direkten Befestigung der Toilettensitzbefestigung, die vorzugsweises Excenterscharniere für den Sitz aufweisen, kann wesentliche Reduktion der Montagezeit und Aufwand erreicht werden.

Der Befestigungskörper, welcher an der Innenseite des Toilettenkörpers befestigbar ist, umgibt im Zustand eines eingesetzten Halteelement vorzugsweise das Halteelement in einem Teilbereich.

Durch die Arretierung des Befestigungskörpers ist der Toilettenkörper an der Wand arretierbar. Das Halteelement ist dabei vorzugsweise als Gewindestange mit einem M12 Gewinde ausgebildet, welches der üblichen Gewindegröße für Halteelemente, welche für die Montage von Wandtoiletten verwendet werden, entspricht.

Der Befestigungsbolzen weist dabei eine Länge auf, die derart ist, dass er vom Befestigungskörper bis zum Toilettensitzbefestigungsloch reicht und vorzugsweise im Wesentlichen bündig an der Oberseite des Toilettenkörper endet.

Bevorzugt wird der Bolzen auf den Befestigungskörper aufgesetzt, besonders bevorzugt auf den Befestigungskörper aufgeschraubt. Hierfür weist der Bolzen ein Innengewinde und der Befestigungskörper ein Außengewinde auf.

Bevorzugt ist vorgesehen, dass der Bolzen eine Vertiefung aufweist, wobei das erste Ende des Befestigungsbolzens eine Spitze aufweist, welche vorzugsweise im Wesentlichen formschlüssig in die Vertiefung einbringbar ist. Eine solche Ausgestaltung ermöglicht eine sehr effiziente Halterung und erlaubt eine sehr exakte Montage des Toilettenkörpers in dem die Spitze in der Vertiefung eine Zentrierfunktion ausübt. Die Vertiefung ist bevorzugt kegelförmig ausgebildet.

Der Befestigungskörper kann mit einem Rohr, welches eine Wandscheibe aufweist, verbunden werden, wobei das Rohr in ein wandseitiges Verbindungsloch des Toilettenkörpers einführbar ist, wobei die Wandscheibe in eine wandseitige Ausnehmung, welche um das Verbindungsloch herum angeordnet ist, einführbar ist. Der Toilettenkörper kann somit zwischen dem Rohr mit Wandscheibe auf der einen Seite und dem Befestigungskörper auf der anderen Seite verklemmt sein bzw. daran fixierbar sein. Am Rohr kann hierfür ein Fixierelement vorgesehen.

Daher ist in einer Ausführungsvariante vorgesehen, dass der Befestigungskörper eine Wandscheibe aufweist, wobei das Rohr in die Öffnung des Toilettenkörpers einführbar ist und wobei die Wandscheibe eine Größe aufweist, die größer als die Öffnung ist, sodass die Wandscheibe am Toilettenkörper, vorzugsweise in einer wandseitigen Ausnehmung, welche um die Öffnung herum angeordnet ist, anbringbar ist. Bei Vorhandensein des Fixierelements kann vorgesehen sein, dass dieses eine Größe aufweist, dass es größer als die Öffnung ist. Es kann mit dem Rohr fixierbar, vorzugsweise verschraubbar, sein. Dadurch werden Rohr mit Wandscheibe und Fixierelement über die Öffnung im Toilettenkörper am Toilettenkörper fixiert.

Der Befestigungskörper und das Rohr mit Wandscheibe, gegebenenfalls auch das Fixierelement, können aus einem Metall oder einem Kunststoff geformt sein. Die Ausformung aus Metall ermöglicht eine stabile und langlebige Verbindung, während die Ausformung aus Kunststoff eine kostengünstige Alternative ermöglicht.

Der Befestigungsbolzen kann einen Außengewindeabschnitt aufweisen, wobei der Befestigungskörper eine Öffnung mit einem korrespondierendem Innengewindeabschnitt aufweist, wobei zur Herstellung der Verbindung zwischen dem Befestigungskörper und dem Bolzen der Befestigungsbolzen in den Befestigungskörper eingeschraubt wird. Diese Gewindeöffnung kann beispielsweise einen Durchmesser von 8 mm aufweisen.

Die Werkzeugaufnahme kann am Befestigungsbolzen ein Profil aufweisen, vorzugsweise ein Innenvierkant-, Innensechskant-, Innensechsrund- oder Innenzwölfkantprofil. Die Größe des Innenvierkant-, Innensechskant-, Innensechsrund- oder Innenzwölfkantprofils ist anhand der Größe des Durchmessers der Gewindeöffnung gewählt, sodass das Innenvierkant-, Innensechskant-, Innensechsrund- oder Innenzwölfkantprofil vorzugsweise eine Größe von 8 mm aufweist.

Die Toilettensitzbefestigung kann über ein Befestigungselement, bevorzugt eine Schraube, mit dem Verbindungsabschnitt verbindbar sein.

In einer Ausführungsform weist das zweite Ende des Befestigungsbolzens eine Bohrung auf, welche kraftschlüssig mit einem Toilettensitz oder einem Excenterscharnier verbindbar ist. Die Bohrung kann mittig zentriert sein und weist einen bevorzugten Durchmesser von 4 mm auf. Zudem kann die Bohrung ein Innengewinde aufweisen, welches das Einschrauben einer Schraube ermöglicht.

Der Verbindungsabschnitt des zweiten Endes des Befestigungsbolzens kann also eine Bohrung aufweisen, welche mit einer Toilettensitzbefestigung, vorzugsweise einem Excenterscharnier, verbindbar ist. Toilettensitzbefestigung, vorzugsweise einem Excenterscharnier, können auch Teil des WC-Befestigungssystem sein.

Die Bohrung kann ein Innengewinde aufweisen. Die Gewindeöffnung kann z.B. einen Durchmesser von 8 mm aufweisen.

Die Toilettensitzbefestigung, vorzugsweise das Excenterscharnier, kann über ein Befestigungselement, bevorzugt eine Schraube, mit dem zweiten Ende des Befestigungsbolzen verbunden wird. Besonders bevorzugt ist hierbei eine 4 mm Schraube, welche passend zu einer 4 mm Bohrung gewählt wird.

Hinsichtlich des Verfahrens ist noch zu ergänzen, dass der Wandbolzen in einem Wandabstand von 12 mm auf das Halteelement aufgedreht werden kann. Dieser Abstand ist derart ausgewählt, dass die Nut des Wandbolzen, die Öffnung des Befestigungskörpers und das Toilettensitzbefestigungsloch möglichst in einer Flucht liegen.

In einer Ausführungsform umfasst die Verbindung zwischen Befestigungsbolzen und Befestigungskörper eine Schraubverbindung. Zum einen weist der Befestigungsbolzens hierzu ein Teilgewinde auf, welches als Außengewinde ausgebildet ist und an dem ersten Ende des Befestigungsbolzen angeordnet ist, sodass der Befestigungsbolzen in die Öffnung des Befestigungskörpers, welche als Gewindeöffnung ausgeformt ist, einschraubbar ist. Zum anderen weist die Gewindeöffnung des Befestigungskörpers ein Innengewinde auf, welches entsprechend dem Außengewinde des Befestigungsbolzens ausgebildet ist. Dadurch ist gewährleistet, dass der Befestigungsbolzen in die Gewindeöffnung einschraubbar ist.

Der Befestigungsbolzen kann über einen Innensechskant oder Innensechsrund, welcher am zweiten Ende des Befestigungsbolzen angeordnet ist, kraftschlüssig mit dem Excenterscharnier oder Verbindungselement des Toilettensitzes verbunden werden.

Das Excenterscharnier oder Verbindungselement des Toilettensitzes kann über eine Bohrung, welche am zweiten Ende des Befestigungsbolzen angeordnet ist, mit dem Befestigungsbolzen verbunden werden. Diese Verbindung umfasst vorzugsweise eine Schraubverbindung.

Die Verbindung zwischen Befestigungsbolzen und Befestigungskörper kann über eine Schraubverbindung hergestellt werden.

Der Befestigungsbolzen wird bevorzugt über einen Innenvierkant, Innensechskant, Innensechsrund oder Innenzwölfkant, welcher am zweiten Ende des Befestigungsbolzen angeordnet ist, kraftschlüssig mit dem Excenterscharnier oder Verbindungselement des Toilettensitzes verbunden.

Die Toilettensitzbefestigung des Toilettensitzes kann über eine Bohrung, welche am zweiten Ende des Befestigungsbolzen angeordnet ist, mit dem Befestigungsbolzen verbunden werden.

Der Bolzen kann in einem Wandabstand von 12 mm auf das Halteelement aufgedreht werden.

Die Erfindung betrifft außerdem eine Wandtoilette, umfassend einen Toilettenkörper und ein WC-Befestigungssystem der vorgenannten Art. Der Toilettenkörper ist bevorzugt keramisch ausgebildet.

Bevorzugt umfasst die Wandtoilette außerdem einen Toilettensitz mit einer Toilettensitzbefestigung. Toilettensitz und Toilettensitzbefestigung können fix miteinander verbunden sein oder sie können lösbar miteinander verbindbar sein.

### DETAILLIERTE BESCHREIBUNG DER ERFINDUNG

Weitere Vorteile und Details der Erfindung werden nachfolgend anhand der folgenden Figuren und Figurenbeschreibungen erläutert.
- Fig. 1a, 1b: zeigen schematische Darstellungen einer Wandtoilette nach Stand der Technik in zwei Ansichten.
- Fig. 2a, 2b: zeigen eine Wand mit Halteelement mit Halteelement im getrennten (Fig. 2a) und verbundenen Zustand.
- Fig. 3a, 3b: zeigt eine schematische Darstellung eines Ausschnitts einer erfindungsgemäßen WC-Befestigung von vorne (Fig. 3b) und im Querschnitt entlang B-B (Fig. 3a).

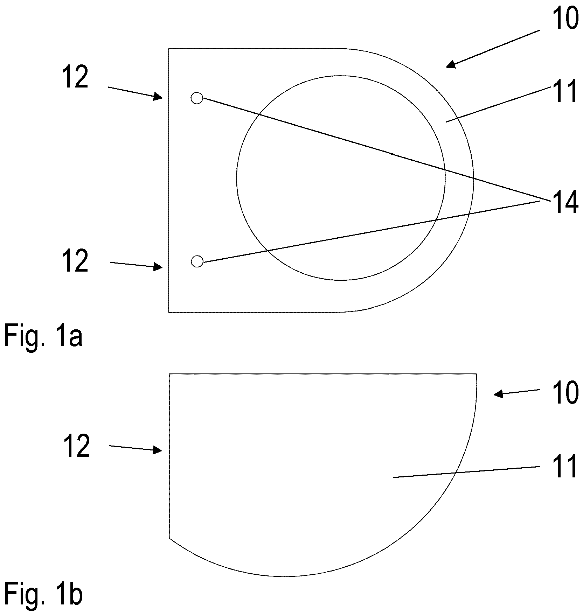

Fig. 1a und 1b zeigen ein Wandtoilette 10, die an einer Wand 2 über ein an der Wand 2 anbringbares Halteelement 3 befestigbar sind. Die Wandtoilette 10 umfasst den Toilettenkörper 11, zwei Öffnungen 12 an der Rückseite der Wandtoilette 10, d.h. der der Wand 2 zugewandten Seite. Die Positionen der Öffnungen 12 sind angedeutet, aber nicht tatsächlich eingezeichnet. Außerdem sind zwei Toilettensitzbefestigungslöcher 14 gezeigt, die auf derselben Höhe wie die Öffnungen 12 liegen.

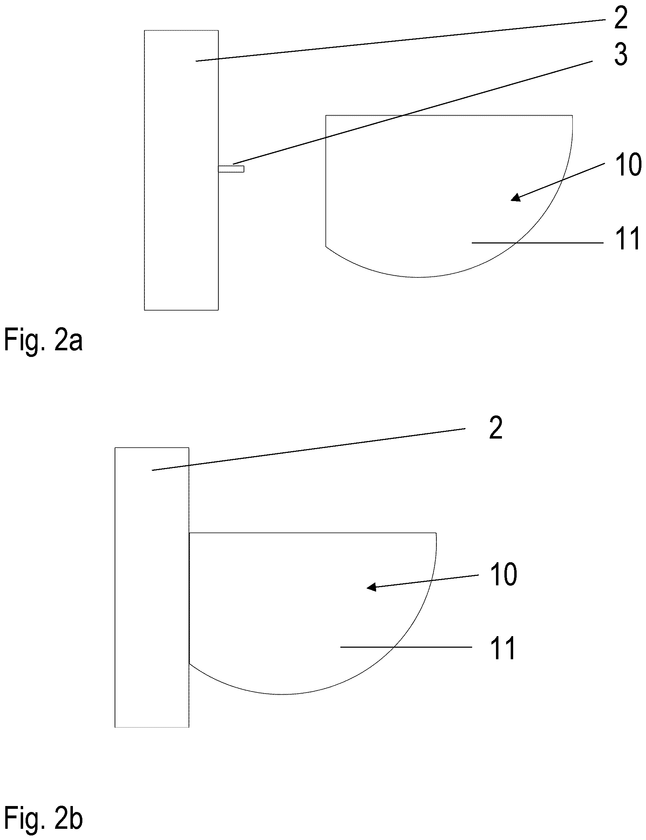

Zur Befestigung der Wandtoilette 10 an einer Wand 2 (Fig. 2a, 2b) wird der Toilettenkörper 11 über die Halteelemente 3 geschoben. Dazu werden die Halteelemente 3 in die Öffnungen 12 des Toilettenkörpers 11 geführt.

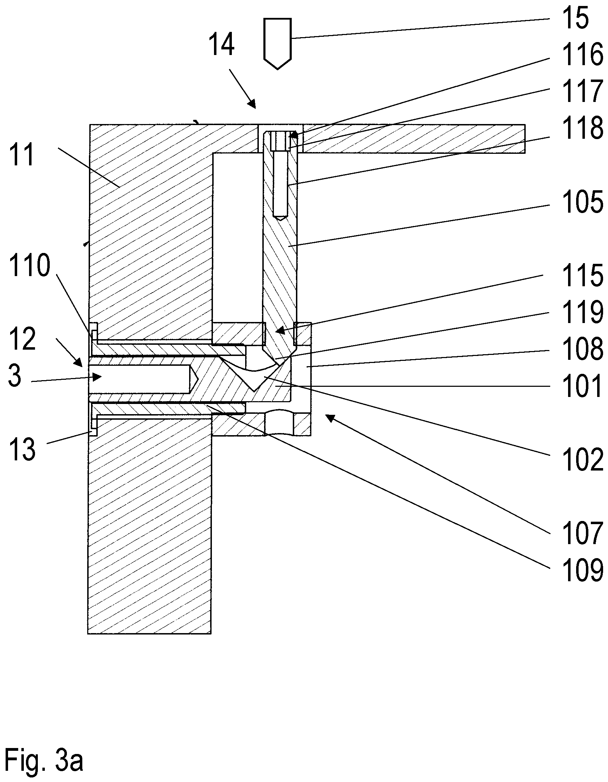

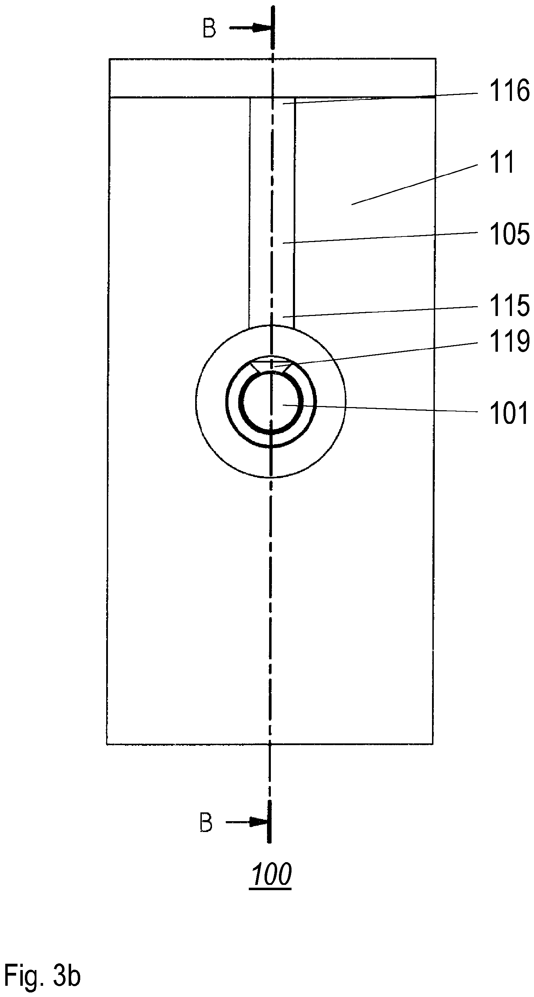

In Fig. 3a ist eine Schnittdarstellung eines Ausschnitts einer erfindungsgemäßen WC-Befestigungssystem 110 und in Fig.3b ist das Befestigungssystem 110 vor der Vorderseite dargestellt. Die Fig. 3a und 3b zeigen den Toilettenkörper 11, welcher auf ein Halteelement 3 mit dem Bolzen 101 verbunden wird. Dazu wird das Halteelement 3, welches als Gewindestange mit M12 Gewinde konfiguriert ist, mit dem Bolzen 101, welcher eine Vertiefung 102 in Kegelform aufweist, verbindbar. Die Verbindung zwischen Halteelement 3 und Bolzen 101 ist dementsprechend als Schraubverbindung ausgeformt. Die Vertiefung 102 des Bolzens 101 ist in Richtung eines Toilettensitzbefestigungsloches 14 orientiert.

Der Befestigungsbolzen 105, welcher zwei sich unterscheidende Enden 115, 116 aufweist, wird mit einem ersten Ende 115 des Befestigungsbolzens 105 in das Toilettensitzbefestigungsloch 14 eingeführt. Der Befestigungskörper 107 ist an der Innenseite des Toilettenkörpers 11 befestigt und umgibt im Zustand eines eingesetzten Halteelement 3 dieses in einem Teilbereich.

Zur Befestigung des Befestigungskörpers 107 am Toilettenkörper 11 wird der Befestigungskörper 107 über ein Rohr 109 und eine Wandscheibe 110 verbunden, wobei das Rohr 109 in die Öffnung 12 des Toilettenkörpers 11 eingeführt wird und wobei die Wandscheibe 110 eine Fläche aufweist, die größer als die Fläche der Öffnung 12 ist, sodass die Wandscheibe 110 am Toilettenkörper 11 in einer wandseitigen Ausnehmung 13, welche um die Öffnung 12 herum angeordnet ist, angebracht werden kann. Der Befestigungskörper 107, Rohr 109 und Wandscheibe 110 klemmen den Toilettenkörper 11 ein, indem das Rohr 109 mit einem Außengewinde mit einem Fixierelement 108 mit Innengewinde verschraubt wird. Dadurch entsteht eine Klemmverbindung zwischen Befestigungskörper 107 und Toilettenkörper 11.

Der Befestigungsbolzen 105 weist ein erstes Ende 115 auf, welches über ein Toilettensitzbefestigungsloch 14 in den Toilettenkörper 11 eingeführt wird. Das erste Ende 115 des Befestigungskörpers 107 wird mit dem Bolzen 101 verbunden. Der Befestigungsbolzen 105 weist außerdem ein zweites Ende 116 auf, welches einen Verbindungsabschnitt 118 für eine Toilettensitzbefestigung 15 aufweist und welches eine Werkzeugaufnahme 117 für ein Werkzeug zur Verbindung von Bolzen 101 und Befestigungskörper 107 aufweist.

Der Verbindungsabschnitt 118 weist ein nicht näher gezeigtes Gewinde auf, welches mit einem Gewinde der Toilettensitzbefestigung 15 verschraubt werden kann. Die Werkezugaufnahme 117 ist als Innensechskant ausgebildet und kann mit einem Sechskantdreher betätigt werden.

## Patentansprüche

1. WC-Befestigungssystem (100) zur Befestigung einer Wandtoilette (10) an einer Wand (2) über ein an der Wand (2) anbringbares Halteelement (3),
wobei der Toilettenkörper (11) eine Öffnung (12) aufweist, welche wandseitig am Toilettenkörper (11) angeordnet ist und in welche das Halteelement (3) einsetzbar ist,
wobei das WC-Befestigungssystem (100) umfasst:
• einen Bolzen (101), welcher mit dem an der Wand (2) befestigten Halteelement (3) verbindbar ist,
• einen Befestigungskörper (107), welcher an der Innenseite des Toilettenkörpers (11) befestigbar ist, und
• einen Befestigungsbolzen (105) zur Herstellung einer Verbindung zwischen dem Bolzen (101) und dem Befestigungskörper (107),
**dadurch gekennzeichnet, dass**
der Befestigungsbolzen (105) ein erstes Ende (115) aufweist, welches über ein Toilettensitzbefestigungsloch (14) in den Toilettenkörper (11) einführbar ist, wobei über das erste Ende (115) der Befestigungskörper (107) mit dem Bolzen (101) verbindbar ist,
wobei der Befestigungsbolzen (105) ein zweites Ende (116) aufweist, welches einen Verbindungsabschnitt (118) für eine Toilettensitzbefestigung (15) aufweist und welches eine Werkzeugaufnahme (117) für ein Werkzeug zur Verbindung von Bolzen (101) und Befestigungskörper (107) aufweist.

2. WC-Befestigungssystem nach Anspruch 1, **dadurch gekennzeichnet, dass** der Bolzen (101) eine Vertiefung (102) aufweist, wobei das erste Ende (115) des Befestigungsbolzens (105) eine Spitze (119) aufweist, welche vorzugsweise im Wesentlichen formschlüssig in die Vertiefung (102) einbringbar ist.

3. WC-Befestigungssystem nach Anspruch 1 oder Anspruch 2, **dadurch gekennzeichnet, dass** der Befestigungskörper (107) ein Rohr (109) und eine Wandscheibe (110) aufweist, wobei das Rohr (109) in die Öffnung (12) des Toilettenkörpers (11) einführbar ist und wobei die Wandscheibe (110) eine Fläche aufweist, die größer als die Fläche der Öffnung (12) ist, sodass die Wandscheibe (110) am Toilettenkörper (11), vorzugsweise in einer wandseitigen Ausnehmung (13), welche um die Öffnung (12) herum angeordnet ist, anbringbar ist.

4. WC-Befestigungssystem nach einem der Ansprüche 1 bis 3, **dadurch gekennzeichnet, dass** der Befestigungsbolzen (105) einen Außengewindeabschnitt aufweist, wobei der Befestigungskörper (107) eine Öffnung mit einem korrespondierendem Innengewindeabschnitt aufweist, wobei zur Herstellung der Verbindung zwischen dem Befestigungskörper (107) und dem Bolzen (101) der Befestigungsbolzen in den Befestigungskörper (107) eingeschraubt wird.

5. WC-Befestigungssystem nach einem der Ansprüche 1 bis 5, **dadurch gekennzeichnet, dass** die Werkzeugaufnahme am Befestigungsbolzen (105) ein Profil aufweist, vorzugsweise ein Innenvierkant-, Innensechskant-, Innensechsrund- oder Innenzwölfkantprofil.

6. WC-Befestigungssystem nach einem der Ansprüche 1 bis 5, **dadurch gekennzeichnet, dass** die Toilettensitzbefestigung (15) über ein Befestigungselement, bevorzugt eine Schraube, mit dem Verbindungsabschnitt verbindbar ist.

7. WC-Befestigungssystem nach Anspruch 6, **dadurch gekennzeichnet, dass** der Verbindungsabschnitt (117) des zweiten Endes (116) des Befestigungsbolzens (105) eine Bohrung aufweist, welche mit einem Toilettensitzbefestigung (15), vorzugsweise einem Excenterscharnier, verbindbar ist.

8. WC-Befestigungssystem nach Anspruch 7, **dadurch gekennzeichnet, dass** die Bohrung ein Innengewinde aufweist.

9. Wandtoilette (10) umfassend einen Toilettenkörper (11) und ein WC-Befestigungssystem (110) nach einem der Ansprüche 1 bis 8.

10. Wandtoilette (10) nach Anspruch 9, weiters umfassend einen Toilettensitz mit einer Toilettensitzbefestigung.

11. Verfahren zur kombinierten Befestigung eines Toilettenkörpers (11) einer Wandtoilette (10) an einer Wand (2) über ein an der Wand (2) angebrachtes Halteelement (3), sowie eines Toilettensitzes am Toilettenkörper (11) mittels eines WC-Befestigungssystems nach einem der Ansprüche 1 bis 8,
umfassend die Schritte:
a) Befestigen des Bolzens (101) am Halteelement (3),
b) Einsetzen des Bolzens (101) in die Öffnung (12) des Toilettenkörpers (11),
c) Einführen des ersten Endes (115) des Befestigungsbolzens (105) in das Toilettensitzbefestigungsloch (14) und Verbinden des Befestigungskörpers (107) mit dem Bolzen (101) über die Betätigung eines Werkzeugs in der Werkzeugaufnahme,
d) Ausrichten der Toilettensitzbefestigung (15) des Toilettensitzes,
e) Befestigen der Toilettensitzbefestigung (15) auf dem Verbindungsabschnitt (118) des Befestigungsbolzens (105) und
f) gegebenenfalls Befestigen des Toilettensitzes an der Toilettensitzbefestigung (15).

12. Verfahren nach Anspruch 11, **dadurch gekennzeichnet, dass** die Verbindung zwischen Befestigungsbolzen (105) und Befestigungskörper (107) über eine Schraubverbindung hergestellt wird.

13. Verfahren nach Anspruch 11 oder Anspruch 12, **dadurch gekennzeichnet, dass** der Befestigungsbolzen (105) über einen Innenvierkant, Innensechskant, Innensechsrund oder Innenzwölfkant, welcher am zweiten Ende des Befestigungsbolzen (105) angeordnet ist, kraftschlüssig mit dem Excenterscharnier oder Verbindungselement des Toilettensitzes verbindbar ist.

14. Verfahren nach einem der Ansprüche 11 bis 13, **dadurch gekennzeichnet, dass** das Toilettensitzbefestigung (15) des Toilettensitzes über eine Bohrung, welche am zweiten Ende des Befestigungsbolzen (105) angeordnet ist, mit dem Befestigungsbolzen (105) verbindbar ist.
